# EUROPÄISCHE PATENTSCHRIFT

(11) **EP 0 743 199 B1**
(45) Veröffentlichungstag und Bekanntmachung des Hinweises auf die Patenterteilung: **11.08.1999**
(21) Anmeldenummer: 96107372.3
(22) Anmeldetag: 09.05.1996
(51) Int. Cl.: B60B 33/04

(54) **Lenk- oder Bockrolle**
Wheel castor
Roulette pivotante

(30) Priorität: 17.05.1995 DE 19517810; 04.04.1996 DE 19613605
(43) Veröffentlichungstag der Anmeldung: 20.11.1996
(73) Patentinhaber: Heinrich Blickle GmbH & Co. KG, 72348 Rosenfeld (DE)
(72) Erfinder:
(74) Vertreter: Säger, Manfred, Dipl.-Ing.

(56) Entgegenhaltungen:
- WO-A-94/17694
- DE-U- 9 412 537
- FR-A- 2 399 328
- US-A- 4 559 669

## Beschreibung

Die Erfindung betrifft eine Lenk- oder Bockrolle gemäß dem Oberbegriff des Hauptanspruches, wie z.B. aus FR-A-2 399 328 bekannt.

Rollen dieser Art mit Feder- und/oder Dämpfersystemen sind bekannt und werden vorzugsweise als Stützrollen für Hubstaplerfahrzeuge mit einem lenkbaren Antriebsrad eingesetzt. Die Höhenbeweglichkeit dient dabei dem Ausgleich von Fahrbahnunebenheiten. Bei bekannten derartigen Rollen erfolgt die Aufwärtsbewegung des Laufrades entgegen der definierten Kraft von Federn.

Trotz der Vorteile der Verwendung von Federn ist von Nachteil, daß die Federkraft proportional zum Federweg ansteigt, was zu einer Entlastung des Antriebsrades und damit zur Reduzierung der Traktion führt, wobei die gespeicherte Einfederungsenergie beim Ausfedern Pendelbewegungen des Fahrzeugs verursacht.

Es sind daher schon anstelle oder zusätzlich zu den Federn Dämpfer eingesetzt worden, bei denen die Aufwärtsbewegung von einem Gas- oder Öldruckdämpfer gebremst wird. Hierbei können Pendelbewegungen zwar weitestgehend verhindert werden. Diese Vorteile werden aber mit Nachteilen des größeren Platzbedarfes, der höheren Störanfälligkeit sowie höheren Herstellkosten erkauft. Überdies führt eine mit der Geschwindigkeit der Aufwärtsbewegung stark ansteigende Dämpferkraft zu einer Entlastung des Antriebsrades und damit ebenfalls zu einer Reduktion der Traktion.

Der Erfindung liegt die Aufgabe zugrunde, eine Lenk- oder Bockrolle gemäß dem Oberbegriff des Hauptanspruches robust und störunanfällig sowie platzsparend auszubilden, die überdies kostengünstig hergestellt werden kann.

Diese Aufgabe wird bei einer gattungsgemäßen Lenk- oder Bockrolle gemäß dem Oberbegriff des Hauptanspruches erfindungsgemäß durch dessen kennzeichnende Merkmale gelöst.

Erfindungsgemäß wird als Reibungsdämpfersystem, z.B. ein Reibscheibenpaket eingesetzt. Somit können solche Lenk- oder Bockrollen einfach und in platzsparender Bauweise robust und störunanfällig und insbesondere kostengünstig hergestellt werden. Durch die erfindungsgemäße Dämpfungsvorrichtung wird das Aufschaukeln und damit Pendelbewegungen des Fahrzeugs zuverlässig vermieden. Insbesondere wird eine von der Geschwindigkeit der Aufwärtsbewegung des Laufrades unabhängige Dämpfungskraft erzeugt, wodurch eine Entlastung des Laufrades weitgehend ausgeschlossen ist und stets eine gute Traktion infolgedessen ermöglicht wird.

Zweckmäßige Ausgestaltungen und Weiterbildungen der Erfindung sind in den Unteransprüchen gekennzeichnet.

Zwei bevorzugte Ausführungsbeispiele werden nachfolgend unter Bezugnahme auf die Zeichnung näher erläutert. In dieser zeigt:
- Figur 1: die Lenkrolle, in teilgeschnittener Seitenansicht;
- Figur 2: eine erste Ausführungsform, in teilweise geschnittener Rückansicht;
- Figur 3: eine zweite Ausführungsform, in teilweise geschnittener Rückansicht;
- Figur 4: den Schnitt A-A gemäß Fig. 2; und
- Figur 5: einen Schnitt B-B gemäß Fig. 3.

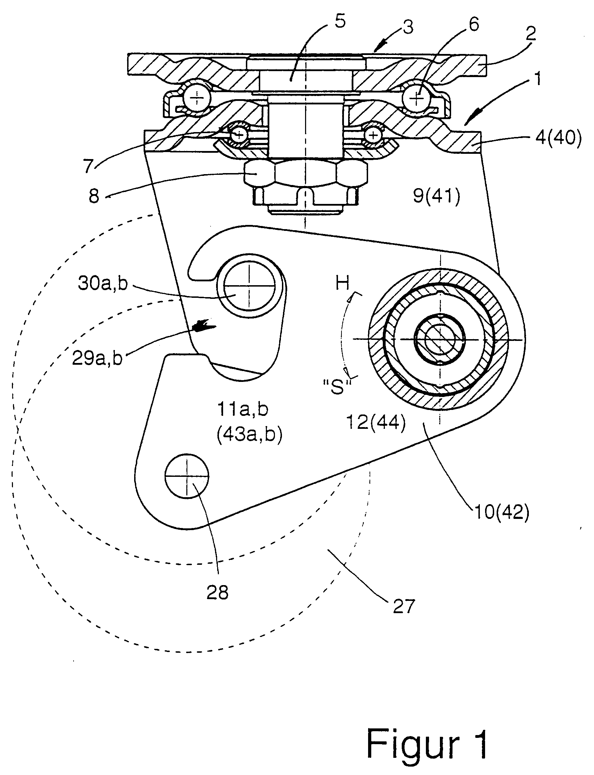

Die Lenkrolle gemäß Figur 1 weist ein Gehäuse 1 auf, dessen Bodenplatte 2 eine Anflanschfläche 3 zur Montage an dem jeweiligen Fahrzeugboden aufweist. Sie ist ferner mit einer Lenkgabel 4 bzw. 40 versehen, die über einen Mittelbolzen 5, zwei Lenkwälzlager 6 und 7 und eine Sechskantmutter 8 mit der Bodenplatte 2 drehbar verbunden ist.

Die Schenkel 9 bzw. 41 der Rollengabel 4 bzw. 40 sind mit einer gabelförmigen Schwinge 10 bzw. 42 versehen, welche um eine Lagerhülse 12 bzw. 44 schwenkbeweglich ist. Die Schwinge 10 bzw. 42 weist zwei Seitenteile 11a, 11b bzw. 43a, 43b auf, die mit der Lagerhülse 12 bzw. 44 fest verschweißt sind.

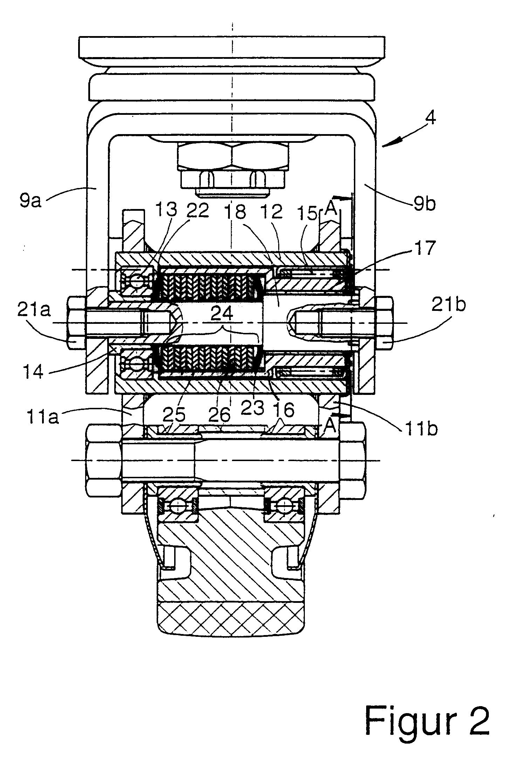

Bei dem ersten Ausführungsbeispiel (Fig. 2) erfolgt die Lagerung der Schwinge 10 einerseits über ein dort angeordnetes Wälzlager 13 und eine Bundbuchse 14 über eine Freilauflagereinheit 15 und eine Gleitlagerbuchse 17 auf einer Achse 18, wobei zwischen der Freilauflagereinheit 15 und der Gleitlagerbuchse 17 eine Zwischenhülse 16 angeordnet ist. Die Achse 18 weist einen Zweikant 19 auf, der in eine Nut 20 an der Innenseite des einen Rollengabelschenkels 9b eingreift und mittels zweier Sechskantschrauben 21a und 21b mit der Rollengabel 4 fest verbunden ist.

In der Zwischenhülse 16 befinden sich zwei Sätze Scheiben eines Reibscheibenpakets 24, welches über an jeder Seite desselben angeordnete Tellerfedern 22, 23 vorgespannt sind. Das Reibscheibenpaket 24 ist mit einem Satz Scheiben 25 durch einen Formschluß mit der Achse 18 drehfest, jedoch axial verschieblich und mit einem zweiten Satz Scheiben 26, durch einen Formschluß mit der Zwischenhülse 16 drehfest, jedoch axial verschieblich verbunden.

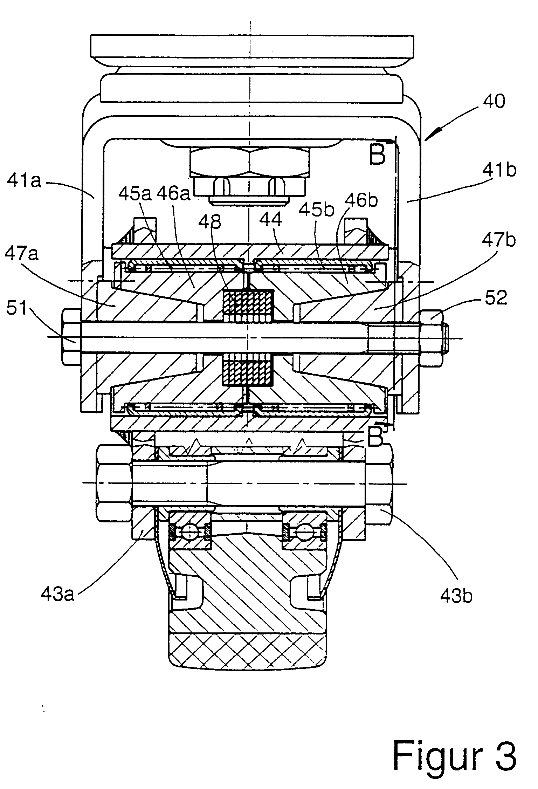

Bei dem zweiten Ausführungsbeispiel (Fig. 3) ist die Schwinge 42 über zwei nebeneinander angeordnete Freilauflagereinheiten 45a sowie 45b, die Innenkonushülse 46a und 46b sowie je eine in dise eingreifende Außenkonushülse 47a sowie 47b gelagert. Die Außenkonushülsen greifen über Zweikante 49a und 49b in die Nuten 50a und 50b in der Rollengabel 40 ein und werden zwischen den Rollengabelschenkeln 41a, 41b durch die Sechskantschraube 51 und die Sechskantmutter 52 gehalten. Zwischen den Innenkonushülsen 46a und 46b ist ein Tellerfederpaket 48 vorgesehen, welches die Innenkonushülsen 46a und 46b mit den Außenkonushülsen 47a und 47b in Reibschlußverbindung hält, wodurch die Reibungsdämpfung erfolgt.

An den freien Enden der Schwinge 10 bzw. 42 ist das Laufrad 27 auf der Achse 28 drehbar gelagert. Die Seitenteile 11a, 11b bzw. 43a, 43b der Schwinge 10 bzw. 42 weisen Aussparungen 29a, 29b auf, in die mit den Schenkeln 9a, 9b bzw. 41a, 41b der Rollengabel 4 bzw. 40 fest verbundene Anschlagzapfen 30a, 30b eingreifen. Hierdurch wird ein maximaler Drehweg der Schwinge mit einem oberen und unteren Anschlag begrenzt.

Bei der Aufwärtsbewegung des Laufrades 27, z.B. bei Überfahren eines Hindernisses führt die Schwinge 10 bzw. 42 eine Drehbewegung in Aufwärtsrichtung "H" (Fig. 1) aus.

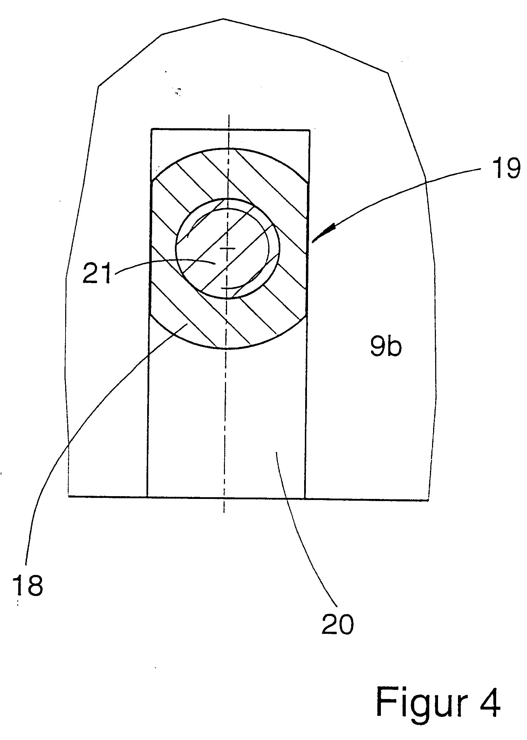

Bei dem ersten Ausführungsbeispiel (Figuren 2 und 4) wird die Drehbewegung durch den in Aufwärtsrichtung "H" sperrenden Freilauf 15 auf die Zwischenhülse 16 übertragen und diese entgegen der Bremswirkung des Reibscheibenpaketes 24 ebenfalls in Aufwärtsrichtung "H" verdreht.

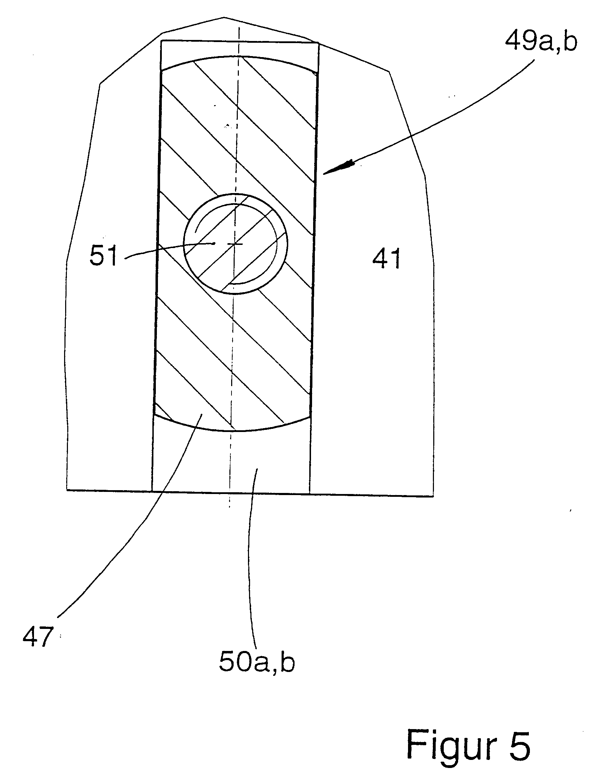

Beim zweiten Ausführungsbeispiel (Fig. 3 und 5) wird die Drehbewegung durch die in Aufwärtsrichtung "H" sperrenden Freiläufe 45a und 45b auf die Innenkonushülsen 46a, 46b übertragen, die entgegen der Bremswirkung zwischen diesen und den Außenkonushülsen 47a, 47b ebenfalls in Aufwärtsrichtung "H" verdreht werden.

Entsprechend der über die Tellerfedern 22, 23 beim ersten Ausführungsbeispiel bzw. über das Tellerfederpaket 48 beim zweiten Ausführungsbeispiel eingestellten Reibungskraft bleibt der Verdrehwiderstand über die gesamte Aufwärtsbewegung des Rades nahezu konstant und unabhängig von der Geschwindigkeit der Aufwärtsbewegung des Laufrades.

Die obere Endstellung des Laufrades 27 ist durch den Anschlag der oberen Kontur der Aussparung 29a, 29b an den Anschlagzapfen 30a, 30b vorgegeben. Bei Entlastung der Laufrolle, z.B. bei Hindernisende oder bei einer Fahrbahnvertiefung geben bei dem ersten Ausführungsbeispiel der Freilauf 15 und beim zweiten Ausführungsbeispiel die Freiläufe 45a und 45b die Schwinge 10 bzw. 42 frei, welche aufgrund der Gewichtskraft sowohl von Laufrad 27 als auch der Schwinge 10 bzw. 42 selbst eine Drehbewegung in Abwärtsrichtung "S" (Fig. 1) ausführt, und zwar bis zum Auftreffen des Laufrades 27 auf der Fahrbahn bzw. bis zum Anschlag der oberen Kontur der Aussparung 29a, 29b an dem Anschlagzapfen 30a, 30b. Zur Beschleunigung der Drehbewegung in Abwärtsrichtung "S" kann zusätzlich eine - hier nicht dargestellte - Feder vorgesehen werden.

## Patentansprüche

1. Lenk- oder Bockrolle, bei denen das Laufrad (27) in einer um eine bezüglich des Gehäuses (1) festen Achse (18, 51) drehbaren Schwinge (10, 42) höhenbeweglich in der Rollengabel (4, 40) derart gelagert ist, daß die durch Belastung auf die Lenkrolle bedingte Aufwärtsbewegung ("H") zumindest gedämpft wird und daß die bei Entlastung bewirkte Abwärtsbewegung ("S") der Schwinge (10, 42) ungedämpft erfolgt,
**dadurch gekennzeichnet**,
daß die Schwinge (10, 42) über eine bei Aufwärtsbewegung ("H") gesperrte und damit mitbewegte und in der Abwärtsbewegung ("S") freilaufende Freilaufeinrichtung (15, 45) an der Rollengabel (4, 40) gelagert ist und daß die Freilaufeinrichtung (15, 45) in der Aufwärtsbewegung drehfest mit einem ersten Reibungsteil verbunden ist, das im Reibschluß mit einem an das erste Reibungsteil angepaßten drehfest an der gehäusefesten Achse festgelegten zweiten Reibungsteil steht.

2. Rolle nach Anspruch 1, dadurch gekennzeichnet, daß die ersten und zweiten Reibungsteile als Reibscheibenpaket (24) ausgebildet sind, dessen erster Satz Scheiben (25) in der Aufwärtsbewegung der Schwinge (10) mit der Freilaufeinrichtung (15) verbunden ist und dessen anderer Satz Scheiben (26) drehfest an der gehäusefesten Achse festgelegt ist.

3. Rolle nach Anspruch 1, dadurch gekennzeichnet, daß das erste und zweite Reibungsteil als zumindest zwei Innenkonushülsen (46a, 46b) sowie zumindest zwei in diese eingreifenden, daran angepaßten Außenkonushülsen (47a, 47b) ausgebildet sind, die bei Aufwärtsbewegung der Schwinge (42) drehfest mit den Freilaufeinrichtungen (45a, 45b) verbunden sind, wobei die Innenkonushülsen (46a, 46b) drehfest an der Achse festgelegt sind.

4. Rolle nach einem der Ansprüche 1 bis 3, dadurch gekennzeichnet, daß die Schwinge (10, 42) zwischen zwei Anschlägen (29a, 29b und 30a, 30b) um die Achse (18, 51) drehbar ist.

5. Rolle nach einem der Ansprüche 1 bis 4, dadurch gekennzeichnet, daß die Freilaufeinrichtung (15, 45) zwei bezüglich der Achse (18, 51) zueinander konzentrische Teileinrichtungen aufweist, von denen die äußere drehfest mit der Schwinge und die innere mit einer Zwischenhülse (17; Fig. 2) oder dem Außenmantel des Innenkonus (46, Fig. 3) verbunden ist.

6. Rolle nach Anspruch 5, dadurch gekennzeichnet, daß die Zwischenhülse (17) sich seitlich neben der auf einer der beiden Seiten der Achse (18) angeordneten Freilaufeinrichtung (15) erstreckt.

7. Rolle nach Anspruch 6, dadurch gekennzeichnet, daß die Zwischenhülse (17) innerhalb einer mit der Schwinge fest verbundenen Lagerhülse (12) angeordnet ist.

8. Rolle nach Anspruch 7, dadurch gekennzeichnet, daß innerhalb der Lagerhülse (12) die Freilaufeinrichtung (15) angeordnet ist.

9. Rolle nach einem der Ansprüche 1 bis 8, dadurch gekennzeichnet, daß der eine Satz von Reibscheiben (25) des Reibscheibenpaketes (24) axial innerhalb der Zwischenhülse (17) jedoch zu dieser drehfest angeordnet ist.

10. Rolle nach einem der Ansprüche 1 bis 9, dadurch gekennzeichnet, daß der andere Satz Scheiben (26) axial auf der Achse (18) verschiebbar, jedoch zu dieser drehfest angeordnet ist.

11. Rolle nach einem der Ansprüche 1 bis 10, dadurch gekennzeichnet, daß jeder Reibscheibe des einen Satzes zumindest eine des anderen Satzes unmittelbar benachbart angeordnet ist.

12. Rolle nach einem der Ansprüche 1 bis 11, dadurch gekennzeichnet, daß an den beiden äußersten Reibscheiben des Reibscheibenpakets zwei die Reibscheiben gegeneinander pressende Federn (22, 23) angeordnet sind.

13. Rolle nach einem der Ansprüche 1 bis 11, dadurch gekennzeichnet, daß nur eine die Reibscheiben gegeneinander und gegen ein Widerlager an der einen äußersten Reibscheibe von der anderen äußersten Reibscheibe pressende Feder vorgesehen ist.

14. Rolle nach Anspruch 12 oder 13, dadurch gekennzeichnet, daß die Feder(n) (22, 23) als auf der Achse (18) angeordnete Tellerfedern ausgebildet sind.

15. Rolle nach einem der Ansprüche 1 bis 14, dadurch gekennzeichnet, daß eine zusätzliche, in Richtung der Abwärtsbewegung ("S") wirkende Feder vorgesehen ist.

16. Rolle nach einem der Ansprüche 1 bis 15, dadurch gekennzeichnet, daß die beiden auf der Achse (51) drehfest zu dieser angeordneten Außenkonushülsen (47a, 47b) mit ihrem größeren Durchmesser an der Rollengabel (41) drehfest angeordnet sind und daß zwischen den beiden, jeder Außenkonushülse (47a, 47b) zugeordneten Innenkonushülsen (46a, 46b) eine diese beiden auf die Außenkonushülsen (47a, 47b) pressende Feder (48) vorgesehen ist.

17. Rolle nach Anspruch 16, dadurch gekennzeichnet, daß die Feder (48) als Tellerfederpaket ausgebildet ist.

## Claims

1. A castor or support wheel in which the wheel member (27) is mounted movably in respect of height in the wheel fork (4, 40) in a pivoting arm (10, 42) rotatable about an axis (18, 51) which is fixed with respect to the housing (1), in such a way that the upward movement ('H') caused by a loading on the castor wheel is at least damped and that the downward movement ('S') of the pivoting arm (10, 42) which is produced upon a relief in load occurs in an undamped manner, characterised in that the pivoting arm (10, 42) is mounted to the wheel fork (4, 40) by way of a freewheel means (15, 45) which is locked in the upward movement ('H') and is thus moved therewith and which freewheels in the downward movement ('S') and that in the upward movement the freewheel means (15, 45) is non-rotatably connected to a first friction portion which is in frictional engagement with a second friction portion which is adapted to the first frictional portion and which is non-rotatably fixed to the axis which is fixed with respect to the housing.

2. A wheel according to claim 1 characterised in that the first and second friction portions are in the form of a friction disc pack (24) whose first set of discs (25) is connected to the freewheel means (15) in the upward movement of the pivoting arm (10) and whose other set of discs (26) is non-rotatably fixed to the axis which is fixed with respect to the housing.

3. A wheel according to claim 1 characterised in that the first and second friction portions are in the form of at least two internally conical sleeves (46a, 46b) and at least two externally conical sleeves (47a, 47b) which are adapted thereto and which engage thereinto and which upon upward movement of the pivoting arm (42) are non-rotatably connected to the freewheel means (45a, 45b), wherein the internally conical sleeves (46a, 46b) are non-rotatably fixed to the axis.

4. A wheel according to one of claims 1 to 3 characterised in that the pivoting arm (10, 42) is rotatable about the axis (18, 51) between two abutments (29a, 29b and 30a, 30b).

5. A wheel according to one of claims 1 to 4 characterised in that the freewheel means (15, 45) has two partial means which are concentric relative to each other with respect to the axis (18, 51) and of which the outer is non-rotatably connected to the pivoting arm and the inner is connected to an intermediate sleeve (17; Figure 2) or the outer periphery of the internal cone (46, Figure 3).

6. A wheel according to claim 5 characterised in that the intermediate sleeve (17) extends laterally beside the freewheel means (15) arranged on one of the two sides of the axis (18).

7. A wheel according to claim 6 characterised in that the intermediate sleeve (17) is arranged within a mounting sleeve (12) fixedly connected to the pivoting arm.

8. A wheel according to claim 7 characterised in that the freewheel means (15) is arranged within the mounting sleeve (12).

9. A wheel according to one of claims 1 to 8 characterised in that the one set of friction discs (25) of the friction disc pack (24) is arranged axially within the intermediate sleeve (17) but non-rotatably with respect thereto.

10. A wheel according to one of claims 1 to 9 characterised in that the other set of discs (26) is arranged axially displaceably on the axis (18) but non-rotatably with respect thereto.

11. A wheel according to one of claims 1 to 10 characterised in that arranged immediately adjacent to each friction disc of the one set is at least one of the other set.

12. A wheel according to one of claims 1 to 11 characterised in that two springs (22, 23) pressing the friction discs against each other are arranged at the two outermost friction discs of the friction disc pack.

13. A wheel according to one of claims 1 to 11 characterised in that there is provided only one spring which presses the friction discs against each other and against a support means at the one outermost friction disc from the other outermost friction disc.

14. A wheel according to claim 12 or claim 13 characterised in that the spring(s) (22, 23) are in the form of disc springs arranged on the axis (18).

15. A wheel according to one of claims 1 to 14 characterised in that there is provided an additional spring acting in the direction of the downward movement ('S').

16. A wheel according to one of claims 1 to 15 characterised in that the two externally conical sleeves (47a, 47b) which are arranged on the axis (51) non-rotatably with respect thereto are arranged non-rotatably with their larger diameter at the wheel fork (41) and that provided between the two internally conical sleeves (46a, 46b) associated with each externally comical sleeve (47a, 47b) is a spring (48) pressing those two internally conical sleeves on to the externally comical sleeves (47a, 47b).

17. A wheel according to claim 16 characterised in that the spring (48) is in the form of a disc spring pack.

## Revendications

1. Roulette pivotante ou fixe, dont la roue (27) se déplaçant sur le sol est associée à une bielle oscillante (10, 42) articulée autour d'un axe (18, 51) fixe par rapport à un carter (1), de manière à être mobile en hauteur dans une chape (4, 40) de sorte qu'un mouvement ascendant (〈〈 H 〉〉) conditionné par l'application d'une charge sur la roulette se trouve au moins amorti et que le mouvement descendant (〈〈 S 〉〉) de la bielle oscillante (10, 42), provoqué par la suppression de cette charge, s'effectue de manière non amortie,
**CARACTERISEE :**
- en ce que la bielle oscillante (10, 42) est montée sur la chape (4, 40) par l'intermédiaire d'un dispositif de roue libre (15, 45), bloqué lors du mouvement ascendant (〈〈 H 〉〉) et entraîné lors du mouvement descendant (〈〈 S 〉〉), et
- en ce que ledit dispositif de roue libre (15, 45) est, lors du mouvement ascendant, lié en rotation à une première pièce de friction, laquelle est en contact frictionnel avec une deuxième pièce de friction, adaptée à la première et liée en rotation avec l'axe intégré au carter.

2. Roulette conforme à la revendication 1, **caractérisée** en ce que la première et la deuxième pièces de friction sont réalisées sous la forme d'un paquet de disques de friction (24) dont le premier jeu de disques est, pendant le mouvement ascendant de la bielle oscillante (10), relié au dispositif de roue libre (15) et dont l'autre jeu de disques (26) est lié en rotation à l'axe intégré au carter.

3. Roulette conforme à la revendication 1, **caractérisée** en ce que la première et la deuxième pièces de friction sont réalisées sous la forme d'au moins deux manchons à conicité interne (46a, 46b), et d'au moins deux manchons à conicité externe (47a, 47b) adaptés aux premiers, lesquels, pendant le mouvement ascendant de la bielle oscillante (42), sont liés en rotation aux dispositifs de roue libre (45a, 45b), tandis que les manchons à conicité interne sont liés en rotation à l'axe.

4. Roulette conforme à l'une des revendications 1 à 3, **caractérisée** en ce que la bielle oscillante (10, 42) est articulée autour de l'axe (18, 51) entre deux butées (29a, 29B et 30a, 30b).

5. Roulette conforme à l'une des revendications 1 à 4, **caractérisée** en ce que le dispositif de roue libre (15, 45) présente deux dispositifs partiels, concentriques l'un par rapport à l'autre et par rapport à l'axe (18, 51), dont le plus éloigné de l'axe est lié en rotation à la bielle oscillante et l'autre est relié à un manchon intermédiaire (17 ; fig. 2) ou au manchon à conicité interne (46a ou 46b, fig. 3).

6. Roulette conforme à la revendication 5, **caractérisée** en ce que le manchon intermédiaire (17) s'étend latéralement à côté du dispositif de roue libre (15) disposé sur l'une des deux extrémités de l'axe (18).

7. Roulette conforme à la revendication 6, **caractérisée** en ce que le manchon intermédiaire (17) est disposé à l'intérieur d'un coussinet (12) relié de manière fixe à la bielle oscillante.

8. Roulette conforme à la revendication 7, **caractérisée** en ce qu'à l'intérieur du coussinet (12) est disposé le dispositif de roue libre (15).

9. Roulette conforme à l'une des revendications 1 à 8, **caractérisée** en ce que l'un (25) des jeux de disques de friction du paquet de disques (24) est disposé axialement à l'intérieur du manchon intermédiaire (17), toutefois de manière anti-rotative par rapport à celui-ci.

10. Roulette conforme à l'une des revendications 1 à 9, **caractérisée** en ce que l'autre jeu de disques (26) est monté libre en translation sur l'axe (18) mais lié en rotation à cet axe.

11. Roulette conforme à l'une des revendications 1 à 10, **caractérisée** en ce qu'à chaque disque de friction de l'un des jeux de disques est associé un disque de l'autre jeu immédiatement voisin.

12. Roulette conforme à l'une des revendications 1 à 11, **caractérisée** en ce que sur les deux disques de friction les plus extérieurs du paquet de disques sont disposés deux ressorts (22, 23) qui sollicitent les disques les uns contre les autres.

13. Roulette conforme à l'une des revendications 1 à 11, **caractérisée** en ce qu'un seul ressort est prévu pour solliciter les disques de friction les uns contre les autres et les serrer contre une butée disposée sur l'un des disques de friction les plus extérieurs à partir de l'autre disque de friction le plus extérieur.

14. Roulette conforme à la revendication 12 ou 13, **caractérisée** en ce que le ou les ressorts (22, 23) sont réalisés en forme de ressorts à rondelles disposés sur l'axe (18).

15. Roulette conforme à l'une des revendications 1 à 14, **caractérisée** en ce qu'un ressort complémentaire est prévu, agissant lors du mouvement descendant (〈〈 S 〉〉).

16. Roulette conforme à l'une des revendications 1 à 15, **caractérisée** en ce que les deux manchons à conicité externe (47a, 47b), liés en rotation à l'axe (51), sont, par leur plus grand diamètre, liés en rotation à la fourche (41), et en ce qu'entre les manchons à conicité interne (46a, 46b) associés à chaque manchon à conicité externe (47a, 47b), est prévu un ressort (48) les comprimant contre lesdits manchons à conicité externe (47a, 47b).

17. Roulette conforme à la revendication 16, **caractérisée** en ce que le ressort (48) est réalisé en forme d'un paquet de ressorts à rondelles.
